Europäisches Patentamt

European Patent Office

Office européen des brevets

(19)

(11) Veröffentlichungsnummer: **0 154 705**
**B1**

# (12) EUROPÄISCHE PATENTSCHRIFT

(45) Veröffentlichungstag der Patentschrift:
**20.09.89**

(21) Anmeldenummer: **84115374.5**

(22) Anmeldetag: **13.12.84**

(51) Int. Cl.⁴: **C 25 D 21/12**

(54) **Verfahren zur vollautomatischen Steuerung der galvanischen Abscheidung von Kupferüberzügen aus sauren Kupferbädern.**

(30) Priorität: **03.02.84 DE 3404267**

(43) Veröffentlichungstag der Anmeldung:
**18.09.85 Patentblatt 85/38**

(45) Bekanntmachung des Hinweises auf die Patenterteilung: **20.09.89 Patentblatt 89/38**

(84) Benannte Vertragsstaaten:
**DE FR GB**

(56) Entgegenhaltungen:
**DE–A– 1 933 262**
**DE–A– 2 757 458**
**PLATING AND SURFACE FINISHING, März 1982, Seiten 62-66; R. HAAK et al.: "Cyclic voltammetric stripping analysis of acid copper sulfate plating baths"**

(73) Patentinhaber: **SCHERING AKTIENGESELLSCHAFT**
**Berlin und Bergkamen**
**Müllerstrasse 170/178 Postfach 65 03 11**
**D-1000 Berlin 65 (DE)**

(72) Erfinder: **Dahms, Wolfgang**
**Hermsdorferstrasse 53 A**
**D-1000 Berlin 26 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 154 705 B1

**Beschreibung**

Die Erfindung betrifft ein Verfahren zur vollautomatischen Steuerung der galvanischen Abscheidung von Kupferüberzügen aus sauren Kupferbädern gemäß Oberbegriff des Anspruchs 1.

Galvanische Bäder unterliegen während ihres Betriebes naturgemäß einem ständigen Verbrauch an ihren Bestandteilen, welche zum Erhalt gleicher Abscheidungsbedingungen und damit zur Erzielung der gewünschten Qualität der abzuscheidenden Überzüge ständig zudosiert werden müssen. Dies erfordert eine vorherige Feststellung der jeweiligen Konzentration an den einzelnen Bestandteilen um Unter- oder auch Überdosierungen zu vermeiden. Während die Feststellung der Metallionenkonzentration durch analytische Methoden und Leitfähigkeitsmessungen bereits befriedigend gelöst ist, besteht ein Grundbedürfnis, auch den Gehalt an solchen Bestandteilen zu überwachen und zu ergänzen, die als Glanzbildner bzw. Inhibitoren eine außerordentlich wichtige Funktion erfüllen.

Auch diese Substanzen unterliegen während des Stromdurchlaufs einem ständigen Verbrauch, dessen Überwachung mit besonderen Schwierigkeiten verbunden ist, da es sich überwiegend um Mischung mehrerer organischer Substanzen handelt, die in unterschiedlichen und zudem extrem niedrigen Konzentrationen vorliegen und je nach Konstitution verschiedenartig abgebaut bzw. zersetzt werden.

Es ist zwar bereits vorgeschlagen worden, den aktuellen zustand mit analytischen Methoden zu ermitteln, wobei man sich der Auswertung von Tafel-Geraden oder der cyclischen Voltametrie (Plating and Surface Finishing 65 (1978) 5/60f und 69 (1982) 3/62f bediente. Eine Anwendung dieser Methoden wird auch bereits in der DE-OS 27 57 458 beschrieben, wobei jedoch diskontinuierlich gearbeitet wird und außerdem zusätzlich zwei Referenzelektrolyte eingesetzt werden müssen.

Eine kontinuierliche Arbeitsweise ist mit den bekannten Methoden nicht möglich.

Aufgabe der vorliegenden Erfindung ist die Schaffung eines Verfahrens zur vollautomatischen Steuerung der galvanischen Abscheidung von Kupferüberzügen mit bestmöglichen physikalischen Eigenschaften durch Einsatz eines Messverfahrens und kontinuierliche Zudosierung von verbrauchten Glanzzusätzen.

Diese Aufgabe wird erfindungsgemäß durch den in den Ansprüchen gekennzeichneten Gegenstand gelöst.

Vorteilhafte Weiterbildungen sind in den Unteransprüchen beschrieben.

Das erfindungsgemäße Verfahren ermöglicht in überraschender Weise die galvanische Abscheidung von Kupferüberzügen mit bestmöglichen physikalischen Eigenschaften und elektrischen Kenndaten unabhängig von Anoden- oder Kathoden-material. Von besonderem technischen Vorteil ist es hierbei, daß der laufende Wechsel der Kathodenart- und fläche ohne Einfluß auf die Qualität der Überzüge ist. Die Zudosierung der Glanzzusätze wird mittels des erfindungsgemäßen Verfahrens außerdem in technisch eleganter Weise vollautomatisch gelöst.

Die Durchführung des erfindungsgemäßen Verfahrens erfolgt mittels der cyclischen Voltametrie, bei der durch einen Funktionsgenerator das Potential zwischen einer Bezugselektrode, vorzugsweise Silber/Silberchlorid, und einer rotierenden Platin-Scheibenelektrode zwischen den Umkehrpunkten − 0,2 V und + 1,8 V mit einer Geschwindigkeit von 100 mV/s cyclisch verändert wird.

Im sauren galvanischen Kupferbad tritt als Sollwert ein Peak im Anodenbereich bei etwa + 0,3 V gegen Silber/Silberchlorid auf, dessen Höhe von einem elektrischen Steuergerät überprüft wird und das gegebenenfalls entsprechende Dosierimpulse auf eine Dosierpumpe mit den gewünschten Glanzbildnern überträgt. Während der Elektrolyse wird der Peak kleiner und wird durch Zudosierung der verbrauchten Glanzbildner wieder auf die Standhöhe gebracht.

Das elektronische Steuergerät, ein Komparator, vergleicht die vom Verstärker, einem Potentiostaten, am Maximum erzeugte Spannung im Zeitraum von etwa zwei Zyklen, vorzugsweise 1 Minute. Falls dann innerhalb dieser zwei Zyklen nicht kurzfristig die gewünschte Spannung mit der gewünschten Polarität auftritt, wird erfindungsgemäß ein Dosierimpuls für die Dosierpumpe ausgelöst.

Zur Stabilisierung des Systems wird eine Wartezeit von etwa 2 Minuten eingehalten, bevor eine weitere Messung durch Vergleich und gegebenenfalls bei Abweichung vom Sollwert eine Zudosierung von Glanzbildnern erfolgt.

Das erfindungsmäße Verfahren ermöglicht eine bestmögliche gleichmäßige Kupferabscheidung. Bei konventionellen Verfahren übliche Störungen, die beim Wechseln der Kathodenart, wie beim sogenannten Panel- oder Pattern Plating, oder nach Arbeitspausen oder Säubern der Anoden auftreten, werden vermieden. Aufgrund der Schnelligkeit der elektronischen Informationsweitergabe werden Änderungen in der Zusammensetzung des Bades sofort erfaßt und ausgeglichen. Der Anteil an unbrauchbaren Platten, die zum Beispiel beil der Herstellung von gedruckten Schaltungen nach herkömmlichen Verfahren entsteht, wird hierdurch in großem Maße vermindert.

Zur Durchführung des erfindungsgemäßen Verfahrens lassen sich an sich bekannte Potentiostate und Signalgeneratoren sowie übliche Geräte für die Polarographie und die Voltametrie in Kombination mit einem elektronischen Steuer- und Dosiergerät verwenden.

Als saure Kupferbäder können alle Elektrolyte bekannter Zusammensetzung eingesetzt werden, die im allgemeinen folgende Grundzusammensetzung besitzen :

| | | |
|---|---|---|
| Kupfersulfat ($CuSO_4 \cdot 5H_2O$) | 50 - 250 | g/Liter |
| vorzugsweise | 60 - 80 | g/Liter |
| Schwefelsäure | 50 - 250 | g/Liter |
| vorzugsweise | 180 - 250 | g/Liter |
| Natriumchlorid | 0,05 - 0,25 | g/Liter |
| vorzugsweise | 0,06 - 0,10 | g/Liter |

Anstelle von Kupfersulfat können zumindest teilweise auch andere Kupfersalze benutzt werden. Auch die Schwefelsäure kann teilweise oder ganz durch Fluoroborsäure oder andere Säuren ersetzt werden. Das Bad enthält außerdem übliche Glanzzusätze.

Die Arbeitsbedingungen des Kupferbades sind wie folgt :

pH-Wert : $\leq 1$
Temperatur : 15-35 °C, vorzugsweise 25 °C
Stromdichte : 0,5 bis 8 A/dm$^2$, vorzugsweise 2 bis 4 A/dm$^2$

Die Elektrolytbewegung erfolgt durch Einblasen von Luft.

Folgende Parameter können vorzugsweise zur erfindungsgemäßen Steuerung verwendet werden :
Erster Umkehrpunkt : − 0,1 V bis − 0,4 V
Zweiter Umkehrpunkt : + 1,6 V bis + 2,0 V
Bezogen jeweils auf eine Silber/Silberchloridelektrode.
Geschwindigkeit der Potentialänderung : 10 bis 1 000 mV/s, vorzugsweise 100 mV/s.
Maximum des Peaks : + 0,335 V ± 0,07 V.

Es wird einfacher Gleichstrom verwendet, ein Strom von $4 \times 10^{-4}$ A wird zu 1 V verstärkt und ausgewertet.

Die Arbeitselektrode und die Gegenelektrode bestehen zweckmäßigerweise aus Platin oder einer Platinlegierung. Die Gegenelektrode kann auch aus Kupfer oder einer Kupferlegierung bestehen. Die Umdrehungsgeschwindigkeit der Arbeitselektrode beträgt 500 bis 3 000 U/min, vorzugsweise 2 500 U/min. Der Durchmesser des Platinkerns beträgt etwa 3 mm.

Die nachstehend beschriebenen Figuren und die Beispiele dienen zur Erläuterung der Erfindung.

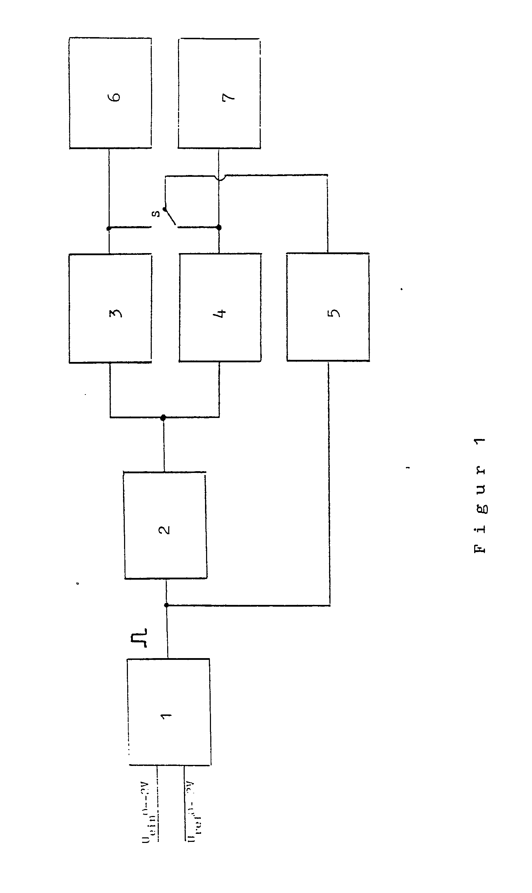

Ein Blockschaltbild der erfindungsgemäß zu verwendenden Komparator-Anordnung ist aus Figur 1 ersichtlich.

Hierin bedeuten :
1 Komparator
2 Timer 1 (40-90 s)
3 Timer 2 (30 s)
4 Timer 3 (1,5 s)
5 Timer 4 (2 min)
6 Dosierpumpe A
7 Dosierpumpe B
8 Scanner S

Solange die Spannung /-$U_{ein}$/>/$U_{ref}$/ ist, entsteht mit jedem Durchlauf der Dreieckspannung ein Impuls, der den Timer T 1 zurücksetzt.

Wenn die Spannung /-$U_{ein}$/</$U_{ref}$/ ist, entfallen diese Impulse. Der Timer T 1 läuft ab und startet die Timer T 2 und T 3 für die Dosierung mit den entsprechenden Dosierzeiten.

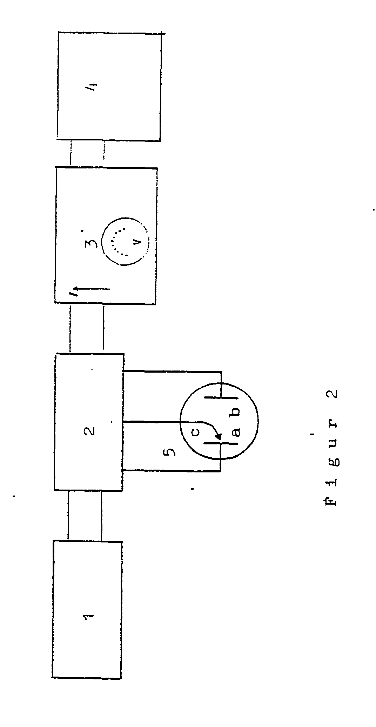

Die Komparator-Anordnung ist mit zwei verschiedenen Dosierzeiten ausgerüstet, damit verschiedenartige Dosierpumpen A und B angeschlossen werden können. Mittels des Schalters S wird die Dosierzeit gewählt. Nach Ablauf der gewählten Dosierzeit wird der Timer T 4 gestartet. Dieser verhindert — zur Stabilisierung des Dosiersystems — weitere Dosierungen für die Zeit T 4, wie dies aus Figur 2 ersichtlich ist.

Figur 2 zeigt eine Meßanordnung mit folgenden Bedeutungen :
1 Funktionsgenerator (VA Scanner 612)
2 Potentiostat (VA Detector 611)
3 Komparator
4 Dosierpumpe
5 Elektronische Zelle mit

3

a) Arbeitselektrode
b) Gegenelektrode
c) Bezugselektrode

Figur 3 zeigt eine weitere Meßanordnung unter Verwendung des Komparators aus Figur 1, wobei ein Teil des Glanzzusatzes über einen Amperestundenzähler zudosiert wird.
Hierin bedeuten :
1 Funktionsgenerator
2 Potentiostat
3 Komparator
4 Dosierpumpe I
5 Dosierpumpe II
6 Amperstundenzähler
7 Elektronische Zelle mit
    a) Arbeitslektrode
    b) Gegenelektrode
    c) Bezugselektrode

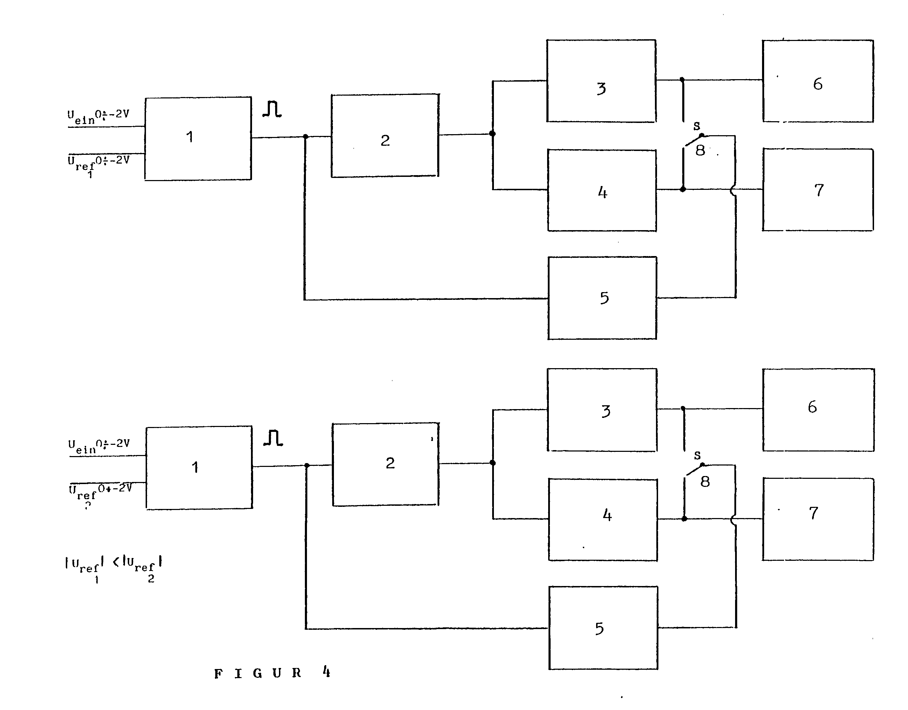

Figur 4 zeigt das Blockschaltbild eines weiteren erfindungsgemäß zu verwendenden Komparators, hier ein Zweistufen-Komparator.
Hierin bedeuten :
1 Komparatoren
2 Timer 1
3 Timer 2
4 Timer 3
5 Timer 4
6 Dosierpumpe A
7 Dosierpumpe B
8 Schalter S

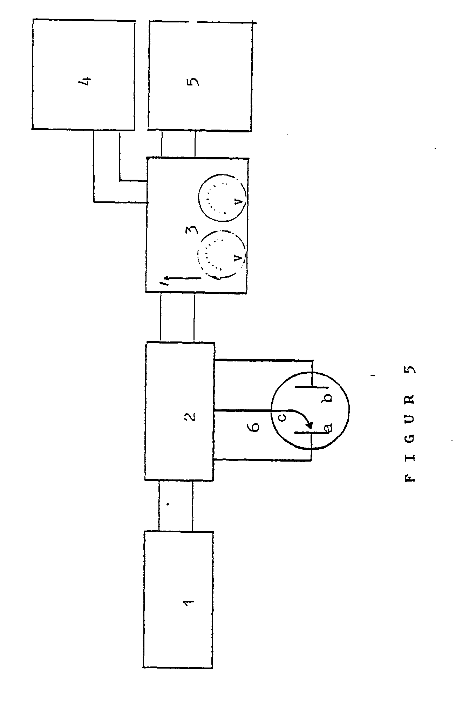

Es werden zwei Referenzspannungen vorgegeben, wobei $/U_{ref1}/</U_{ref2}/$ ist. Wird $/U_{ref1}/$ unterschritten, so wird die Dosierpumpe 1 angesteuert. Wird dagegen $/U_{ref2}/$ überschritten, so wird die Dosierpumpe 2 angesteuert, so daß zwei Glanzbildner zudosiert werden können. Siehe hierzu auch die Figur 5.

Figur 5 zeigt eine Meßanordnung mit folgenden Bedeutungen :
1 Funktionsgenerator
2 Potentiostat
3 Zweistufenkomparator
4 Dosierpumpe I
5 Disierpumpe II
6 Elektronische Zelle mit
    a) Arbeitselektrode
    b) Gegenelektrode
    c) Bezugselektrode

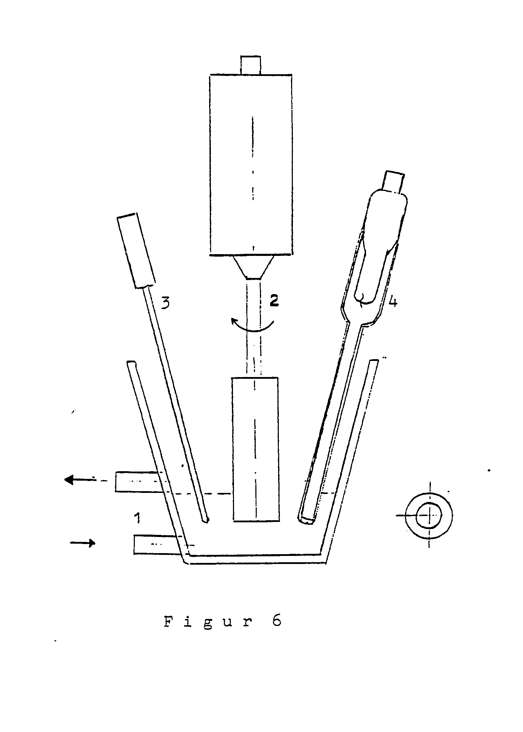

Figur 6 zeigt schließlich die Meßzelle in Seitenansicht.
Hierin bedeuten :
1 Behälter mit Ablauf und Zuspeisung
2 rotierende Scheibenelektrode
3 Gegenelektrode (Platin)
4 Bezugselektrode (Silber/Silberchlorid)
In einigen Fällen kann es sich als zweckmäßig erweisen, die erfindungsgemäße Messung in einem kontinuierlich verdünnten Zustand vorzunehmen, wobei bis zu einer Verdünnung von 1 : 10 mit Wasser, darüberhinaus bis zu Verdünnungen von 1 : 1 000 mit zusatzfreiem Kupferelektrolyten, verdünnter Schwefelsäure oder wäßrigen Alkali- oder Erdalkalisalzlösungen, verdünnt werden kann.

Beispiel 1

Einem Kupferbad der Zusammensetzung
    80    g/l Kupfersulfat ($CuSO_4 \cdot 5\ H_2O$)
   180    g/l Schwefelsäure (konz.)
    0,08 g/l Natriumchlorid
wurden 10 ml/l eines üblichen Glanzbildners auf Basis von Disulfid/Polyglykol zugesetzt. Als Anoden wurden Kupferkugeln mit einem Durchmesser von 12 mm gewählt, die 0,04 % Phosphor enthalten und sich in Titankörben befanden.
Das Bad wurde jeweils 2 Ah/l betrieben und mit einer Dosierung von 3 kg des genannten Glanzbildners für 10 000 Ah nach konventioneller Methode dosiert. Nach 10 Ah/l wurden die Anoden zum Reinigen aus dem Elektrolyten entnommen. Danach wurde in gleicher Weise durchgearbeitet.

Als Parameter zur Beurteilung wurde das optische Aussehen, die Bruchelongation, die Gleichmäßigkeit der Abscheidung im Bohrloch und die Grenzstromdichte gewählt.

Die Ergebnisse sind in folgender Tabelle aufgeführt:

| Alter Ah/l | Aussehen | Bruchelongation % | Gleichm. im Bohrloch | Grenzstrom A/dm$^2$ |
|---|---|---|---|---|
| 0 | matt | 5 | schlecht | 6,0 |
| 2 | gut | 18 | ausreichend | 5,5 |
| 4 | matt | 24 | gut | 4,5 |
| 6 | gut | 20 | gut | 5,5 |
| 8 | gut | 20 | gut | 6,0 |
| 10 | gut | 22 | gut | 6,0 |
| Reinigung | | | | |
| 12 | matt | 7 | schlecht | 6,0 |
| 14 | gut | 17 | ausreichend | 5,5 |
| 16 | matt | 25 | gut | 4,5 |
| 18 | gut | 20 | gut | 5,5 |
| 20 | gut | 21 | gut | 6,0 |

Der Versuch wurde mit dem erfindungsgemäßen Verfahren wiederholt. Die Höhe des Peaks wurde mit + 350 mV festgelegt. Die Dosierung stellte sich jetzt automatische ein und betrug schließlich 3,3 kg/10 000 Ah. Nach der Reinigung wurden die spontanen Schwankungen im Elektrolyt ebenfalls ausgeglichen. Das Ergebnis zeigt folgende Tabelle : 1

| Alter AH/l | Aussehen | Bruchelongation % | Gleichm.im Bohrloch | Grenzstrom A/dm$^2$ |
|---|---|---|---|---|
| 0 | matt | 5 | schlecht | 6,0 |
| 2 | gut | 18 | ausreichend | 5,5 |
| 4 | gut | 22 | gut | 6,0 |
| 6 | gut | 22 | gut | 6,0 |
| 8 | gut | 22 | gut | 6,0 |
| 10 | gut | 22 | gut | 6,0 |
| Reinigung | | | | |
| 12 | gut | 17 | ausreichend | 5,5 |
| 14 | gut | 22 | gut | 6,0 |
| 16 | gut | 23 | gut | 6,0 |
| 18 | gut | 22 | gut | 6,0 |
| 20 | gut | 23 | gut | 6,0 |

Die Ergebnisse zeigen, daß durch das erfindungsgemäße Verfahren eine wesentlich gleichmäßigere Produktionsqualität erzielt wird. Ein Ausschuß entfällt. Es wurde die Meßordnung gemäß Figur 2 gewählt.

Beispiel 2

Einem Kupferbad der Zusammensetzung
200 g/l Kupfersulfat ($CuSO_4$ . 5 $H_2O$)
60 g/l Schwefelsäure (konz.)
0,1 g/l Natriumchlorid

wurden

0,5 ml/l eines üblichen Glanzbildners auf Basis von Disulfid/Polyglykol und

0,5 ml/l eines üblichen Glanzbildners auf Basis von Safraninfarbstoffen zugesetzt. Als Anoden werden übliche Knüppelanoden eingesetzt, die mit 0,04 % Phosphor legiert werden.

Zunächst wurde der Elektrolyt nach konventioneller Methode mit jeweils 0,5 kg/10 kAh der Glanzzusätze dosiert. Nach einer Standzeit von 56 Stunden wurde wieder angefahren. Beurteilt wurde das optische Aussehen, die Einebnung und die Grenzstromdichte.

Die Ergebnisse sind in der folgenden Tabelle aufgeführt:

| Alter Ah/l | Aussehen | Einebnung % | Grenzstromdichte A/dm$^2$ |
|---|---|---|---|
| 0 | gut | 60 | 10 |
| 2 | gut | 60 | 10 |
| Standzeit 56 h | leicht ver-schleiert | 40 | 6 |
| 4 | fast gut | 50 | 8 |
| 6 | gut | 60 | 10 |

Der Versuch wurde mit dem erfindungsgemäßen Verfahren wiederholt. Das Bad wurde kontinuierlich mit Wasser im Verhältnis 1 : 10 verdünnt und nach der Meßanordnung gemäß Figur 5 dosiert. In Dosierpumpe I kam der erstgenannte, in Dosierpumpe II der zweitgenannte Glanzzusatz zur Anwendung. Die Höhe der ersten Referenzspannung wurde auf + 1 500 mV eingestellt, die zweite auf 1 700 mV.

Die Dosierung stellte sich zu Anfang auf etwa 0,5 kg/10 kAh ein. Nach einer Standzeit von 56 Stunden signalisierte die erfindungsgemäße voltametrische Überwachungsmethode einen Mangel an den beiden Glanzbildnern. Es wurden etwa 0,2 ml/l des zweiten Glanzbildners und 0,1 ml/l des ersten Glanzbildners automatisch dosiert. Erst dann pendelte sich die Dosierung auf etwa 0,5 kg/10 kAh ein. Die Ergebnisse zeigt folgende Tabelle:

| Alter Ah/l | Aussehen | Einebnung % | Grenzstromdichte A/dm$^2$ |
|---|---|---|---|
| 0 | gut | 60 | 10 |
| 2 | gut | 60 | 10 |
| Standzeit 56 h | gut | 60 | 10 |
| 4 | gut | 60 | 10 |
| 6 | gut | 60 | 10 |

Eine Verbesserung im Aussehen, in der Einebnung und in der Höhe der Grenzstromdichte wird durch das erfindungsgemäße Verfahren veranlaßt.

Beispiel 3

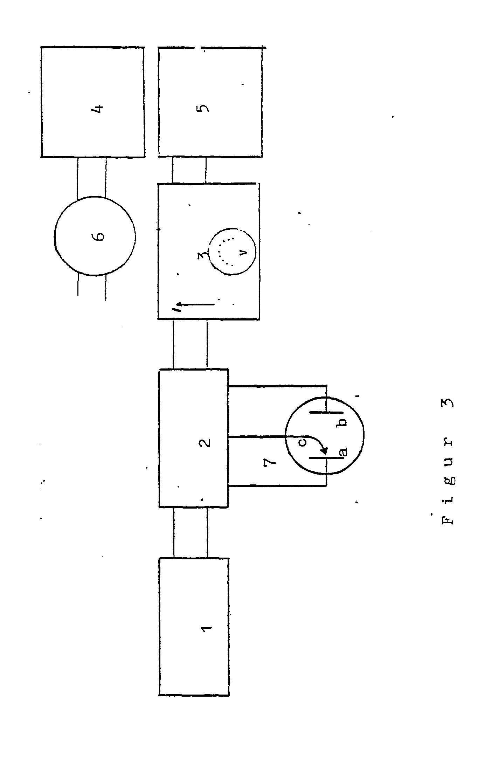

Der im Beispiel 2 beschriebene Versuch wurde gemäß Figur 3 durchgeführt. Hierbei wurde der zweite Glanzzusatz durch einen Amperestundenzähler über die Dosierpumpe I zu 0,5 kg/10 kAh dosiert. Über die Dosierpumpe II wurde der erste Glanzzusatz nach der erfindungsgemäßen voltametrischen Überwachungsmethode dosiert. Die Referenzspannung betrug hierbei + 1 500 mV. Das Ergebnis ist in folgender Tabelle aufgeführt:

# EP 0 154 705 B1

| Alter Ah/l | Aussehen | Einebnung % | Grenzstromdichte A/dm$^2$ |
|---|---|---|---|
| 0 | gut | 60 | 10 |
| 2 | gut | 60 | 10 |
| Standzeit: 56 h | | | |
|  | fast gut | 50 | 8 |
| 4 | gut | 60 | 10 |
| 6 | gut | 60 | 10 |

Man erhält schon mit dieser vereinfachten Anordnung eine merkliche Verbesserung gegenüber dem ersten Ergebnis im Beispiel 2.

## Patentansprüche

1. Verfahren zur vollautomatischen Steuerung der galvanischen Abscheidung von Kupferüberzügen aus sauren Kupferbädern durch Messung der maximalen Stromdichte und kontinuierliche automatische Zudosierung von Glanzzusätzen bei Feststellung von Sollwert-Abweichungen, dadurch gekennzeichnet, daß die maximale Stromdichte mittels cyclischer Voltametrie gemessen und eventuelle Abweichungen vom Sollwert durch automatische Zudosierung mittels elektronischer Dosiereinrichtungen ausgeglichen werden, wobei zur Messung ein Funktionsgenerator verwendet wird, der das Potential zwischen einer Bezugselektrode, vorzugsweise Silber/Silberchlorid, und einer rotierenden Platin-Scheibenelektrode zwischen den Umkehrpunkten − 0,2 V und + 1,8 V mit einer Geschwindigkeit von 100 mV/s cyclisch verändert, und der Sollwert + 0,3 V gegen Silber/Silberchlorid beträgt.

2. Verfahren gemäß Anspruch 1, dadurch gekennzeichnet, daß der Sollwert von einem elektronischen Steuergerät überprüft wird, daß bei festgestellten Abweichungen Dosierimpulse auf eine Dosierpumpe überträgt und diese in Tätigkeit setzt.

3. Verfahren gemäß Anspruch 1, dadurch gekennzeichnet, daß das elektronische Steuergerät einen Komparator darstellt, der die von einem Potentiostaten am Maximum erzeugte Spannung im Zeitraum von etwa zwei Zyklen, vorzugsweise 1 Minute, miteinander vergleicht.

4. Verfahren gemäß Anspruch 1, dadurch gekennzeichnet, daß nach erfolgter Zudosierung eine Wartezeit von etwa 2 Minuten zur Stabilisierung des Systems eingehalten wird, bevor eine weitere Messung erfolgt.

5. Verfahren gemäß Anspruch 1, dadurch gekennzeichnet, daß saure Kupferüberzüge vom pH-Wert ≤ 1 eingesetzt werden.

6. Verfahren gemäß Anspruch 1, dadurch gekennzeichnet, daß als Glanzzusätze übliche Glanzbildner verwendet werden.

7. Verfahren gemäß Ansprüchen 1 bis 6 zur Herstellung von Kupferüberzügen mit jeweils bestmöglichen physikalischen Eigenschaften unabhängig vom eingesetzten Anoden- oder Kathodenmaterial, vorzugsweise zur Verstärkung von Leiterbahnen auf gedruckten Schaltungen und zum Aufbau von Metallschichten auf Leitern oder Nichtleitern.

## Claims

1. Method for the fully automatic control of the electrodeposition of copper coatings from acid copper baths via maximum current density measurement and continuous automatic dosing of brightening additives when set point deviations occur, characterized in that the maximum current density is measured by cyclic voltametric titration and any deviations from the set point are compensated for by automatic dosing of additives by means of electronic dosing devices, a function generator being used for taking the measurements, the potential between the reference electrode, preferably silver/silver chloride, and a rotating platinum disc electrode being cyclically varied by said function generator at a rate of 100 mV/sec between the cuspidal points of − 0.2 V and + 1.8 V respectively, and in that the set point referred to silver/silver chloride is + 0.3 V.

2. Method in accordance with claim 1, characterized in that the set point is monitored by an electronic control unit which transmits dosing pulses to a dosing pump putting the said pump into operation whenever deviations are detected.

3. Method in accordance with claim 1, characterized in that the electronic control unit is a comparator which compares the voltage generated by a potentiostat at the maximum at intervals of approximately two cycles, preferably at intervals of 1 minute.

4. Method in accordance with claim 1, characterized in that a waiting period of approx. 2 minutes is observed to allow the system to stabilize after dosing of additives before further measurements are taken.

5. Method in accordance with claim 1, characterized in that acid copper coatings with a pH of ≤ 1 are employed.

6. Method in accordance with claim 1, characterized in that the brightening additives used are common brighteners.

7. Method in accordance with claims 1 to 6 for the production of copper deposits with the best physical properties obtainable in each case independent of the anode or cathode material employed, preferably for the reinforcement of conductor patterns in printed circuits and for the build-up of metal layers on conductive or non-conductive materials.

**Revendications**

1. Procédé pour le contrôle entièrement automatique de la déposition de métaux par galvanoplastie à partir de bains cupreux acides s'appuyant sur la mesure de la densité de courant maximale et l'addition automatique continue de produits brillanteurs à l'instant où des déviations de la valeur de consigne sont constatées, ledit procédé étant caractérisé en ce que la densité de courant maximale est mesurée par titration voltamétrique cyclique et les déviations éventuelles de la valeur de consigne sont compensées par un dosage automatique à l'aide d'un doseur électronique, un générateur de fonctions étant employé pour varier le potentiel entre une électrode de référence, de préférence en argent/chlorure d'argent, et une électrode-disque rotative en platinum, d'une manière cyclique à la vitesse de 100 mV/s entre les points de rebroussement de − 0,2 V et + 1,8 V, et en ce que la valeur de consigne s'élève à + 0,3 V par rapport à l'argent/chlorure d'argent.

2. Procédé selon revendication 1, caractérisé en ce que la valeur de consigne est contrôlée par un organe de commande électronique qui transmet des impulsions de dosage à une pompe de dosage, la mettant en marche dans le cas où des déviations sont constatées.

3. Procédé selon revendication 1, caractérisé en ce que l'organe de commande électronique est un comparateur qui compare, l'une avec l'autre, les tensions produites sur le maximum par un potentiostat dans l'intervalle de deux cycles environ, et de préférence dans l'intervalle d'une minute.

4. Procédé selon revendication 1, caractérisé en ce qu'un intervalle d'attente d'environ 2 minutes est respecté après le dosage pour permettre au système de se stabiliser avant qu'une mesure ultérieure soit effectuée.

5. Procédé selon revendication 1, caractérisé en ce que des dépôts de cuivre acides ayant un pH de ≤ 1 sont utilisés.

6. Procédé selon revendication 1, caractérisé en ce que les produits brillanteurs utilisés sont des lustrants conventionnels.

7. Procédé selon une des revendications 1 à 6 pour la réalisation de dépôts de cuivre ayant les meilleures propriétés physiques possibles indépendamment de la matière utilisée pour les anodes ou cathodes, destinés de préférence au renforcement des pistes conductives de circuits imprimées et à la constitution de couches métalliques sur les supports conducteurs ou non-conducteurs.

U_ein 0—2V

U_ref 0—2V

Figur 1

Figur 2

Figur 3

FIGUR 4

FIGUR 5

F i g u r   6